(19) **Europäisches Patentamt**
**European Patent Office**
**Office européen des brevets**

(11) **EP 4 421 306 A1**

(12) # EUROPEAN PATENT APPLICATION

(43) Date of publication:
**28.08.2024   Bulletin 2024/35**

(21) Application number: **24460009.4**

(22) Date of filing: **23.02.2024**

(51) International Patent Classification (IPC):
**F02M 27/04** *(2006.01)*

(52) Cooperative Patent Classification (CPC):
**F02M 27/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.02.2023   PL 44386823**

(71) Applicants:
- **Diloyan, Georgiy**
  **Huntingdon Valley, PA 19006 (US)**
- **Andreasyan, Mushegh**
  **Huntingdon Valley, PA 19006 (US)**

- **Belotserkovskiy, Aleksey**
  **Furlong, PA 18925 (US)**
- **Iarmosh, Oleg**
  **01033 Kyiv (UA)**

(72) Inventors:
- **DILOYAN, Georgiy**
  **PA 19006 (US)**
- **ANDREASYAN, Mushegh**
  **PA 19006 (US)**

(74) Representative: **Rygiel, Andrzej et al**
**Kancelaria Rzecznika Patentowego**
**ul. Bohaterow Warszawy 26, Lok. F**
**43-300 Bielsko-Biala (PL)**

(54) ## DEVICE FOR MAGNETIC TREATMENT OF LIQUID AND GASEOUS MEDIUMS

(57)   The invention concerns a device for magnetic treatment of liquid and gaseous mediums and can be applied in engine construction and transportation to improve energy properties of liquid hydrocarbon fuels, in particular fuel for combustion engines, and to improve engines efficiency.

A device for magnetic treatment of liquid and gaseous mediums contains a cylindrical body (1), equipped with a flow chamber for pumping treated medium through it, in particular fuel for combustion engines. The flow chamber is made in the form of a diamagnetic corrugated pipe (3) filled with one row of sphere magnets (2), whose middle part (3.1) has the form of a spiral element installed inside the cylindrical body (1). End sections of the corrugated pipe (3) are an inlet nozzle (3.2) and an outlet nozzle (3.3) of the device, located opposite to each other at both end sides of the cylindrical body (1).

A technical effect of the invention claimed consists in increasing efficiency of liquid and gaseous mediums treatment, in particular fuel for combustion engines, owing to its magnetisation, dispersion and homogenisation and increasing distance and time of contact of fuel with the sphere magnets (2) which induce a magnetic field in the flow chamber (7) of the device claimed.

Fig. 1

EP 4 421 306 A1

## Description

The subject matter of the invention is a device for magnetic treatment of liquid and gaseous mediums, which can be applied in the sector of engine construction and transportation, heating and energy, in crude oil processing, food industry, medicine, biology, agriculture and other fields where magnetic treatment of liquids, colloidal and gaseous work environments are applied. The purpose of the invention is to improve energy performance of liquid hydrocarbon fuels, for example fuel for combustion engines, and to improve engines performance, as well as to magnetise other liquids, water in particular, in a static magnetic field in order to purify liquids or increase their biological activity during their application. Such liquids include both drinking and mineral water, as well as juices, medicinal herbs teas and infusions, and other such.

Processes taking place under magnetic interaction on liquid and gaseous mediums of diamagnetic or paramagnetic properties, in particular on liquid hydrocarbon fuels, including combustion engines fuel, influence improvement of physico-chemical parameters of the treated fuel, in particular its density, calorific value and ease of combustion, and hence reduction of consumption of fuel entering a combustion engine.

It is also known that a low-level magnetic field contributes positively to biological activity of liquid mediums. For example, water treated in a magnetic field, its aqueous solutions as well as other liquids, obtain finer and more homogenous structure, which increases their biological activity, liquidity and dissolving ability.

From the Russian patent no. RU 2115010 there is known a device for magnetic treatment of liquids, comprising of a cylindrical body equipped with an internal flow chamber through which treated liquid is pumped, in particular fuel for combustion engines, and inlet and outlet nozzles located opposite to each other on both end sides of the cylindrical body. The flow chamber is divided by an expansion chamber into an inlet and an outlet chamber. In the inlet and the outlet chamber there are sphere permanent magnets of different magnetic flux, whereby the value of the magnetic flux of the sphere magnets filling the inlet chamber is lower than the value of the magnetic flux of the sphere magnets filling the outlet chamber. The device is characterised by a two-stage treatment of fuel passing through the flow chamber. In the first stage fuel gets into the inlet chamber where it is exposed to the magnetic field from sphere magnets with a lower flux, as a result of which fuel undergoes separation, then after passing through the expansion chamber fuel gets into the outlet chamber where it is exposed to the magnetic field from sphere magnets with a higher flux. In the expansion chamber flow rate decreases and pressure drops, as a result of which the flow obtains a laminar flow, which prevents dispersion of fuel and its transformation into a homogenous mixture.

A disadvantage of the device is a low degree of fuel dispersion and its insufficient magnetisation due to the fact that a fuel stream when passing through the expansion chamber moves in a laminar flow mode, which adversely affects the dispersion and homogenisation process of liquid fuels. What is more, a sufficient time for the treatment of fuel in the magnetic field is not provided due to a negligible distance travelled by the pumped treated fuel through the inlet and the outlet chambers filled with the sphere magnets, which decreases the level of fuel magnetisation and the efficiency of the device as a whole.

From the Russian description of a utility model no. RU 67654U there is known a device for magnetic treatment of liquids, comprising of a cylindrical body equipped with a flow chamber for pumping treated liquid through it, in particular fuel for combustion engines, filled with one row of neighbouring cylindrical magnets, as well as with inlet and outlet pipes located opposite to each other at both end sides of the cylindrical body. The flow chamber is made in the form of a hollow cylinder with a smooth cylindrical wall along which the flow of the treated medium moves, while preserving the laminar flow of the pumped liquid, in particular of fuel for combustion engines, near the cylindrical wall. Inside the flow chamber cylindrical magnets are installed in one row, rotated in relation to the longitudinal axis of the cylindrical body by 90°, with two working slots for fuel movement created. In this case the cylindrical magnets are adjacent to each other along the generatrix of their cylindrical surfaces. The diameter of the cylindrical magnets is selected in reference to their height in 2:1 ratio, whereby the diameter of the magnets is 1.5-2 mm smaller than the diameter of the cross section of the flow chamber. In this way purified liquid passes through the working slots along the opposite poles of the magnets along the longitudinal axis of the flow chamber. In this case fuel particles cross lines of force of the magnetic field created by each pair of working elements and are subjected to magnetic treatment. However, due to the fact that the treated liquid flows through the working slots along the smooth internal cylindrical surface of the flow chamber, the flow of the liquid is mainly of the laminar nature.

A disadvantage of the known technical solution is a low degree of dispersion and homogenisation of fuel resulting from the fact that a fuel stream flows through the flow chamber in a laminar flow. At the same time, due to a limited length of the working area of the device in which the treated fuel is exposed to the activity of the magnetic field, the degree of fuel magnetisation and the performance of the whole device decreases.

A solution closest to the invention is a device for magnetic treatment of liquid and gaseous mediums known from a Russian inventor's certificate to a description of an invention no. SU 1388573, containing a cylindrical body equipped with a flow chamber for pumping treated medium through it, in particular fuel for combustion engines, in which at least one row of sphere magnets is located and inlet and outlet nozzles are located opposite to each other at both end sides of the cylindrical body. The flow chamber is made in the form of a hollow cylinder with a smooth cylindrical wall along which the flowing treated medium moves, whereby a laminar flow of the pumped flow, in particular fuel for combustion engines, is maintained near the cylindrical wall. In this way the treated medium passes through working slots along the longitudinal axis of the flow chamber. The device contains a winding to generate an alternating electromagnetic field and a power supply, whereas the sphere magnets located in the flow chamber are placed loosely. The alternating electromagnetic field makes the sphere magnets move in the flow chamber depending on the direction of the magnetic flux generated by the electric winding. At the same time, due to the magnets being loosely fitted in relation to each other, when the direction of the magnetic flux generated by the electric winding changes, the sphere magnets start vibrating, which results in vibrations of the whole device, decreases its reliability and increases risk of the device failure.

A disadvantage of the known solution is design complexity, namely, the presence of the power supply and an additional element in the form of a coil and the related absence of the device autonomy during its operation. At the same time, due to the laminar nature of the purified fuel flow, its sufficient dispersion and homogenisation are not ensured, which decreases performance of the proposed device.

The purpose of the invention is to create a device for magnetic treatment of liquid and gaseous mediums which eliminates disadvantages of the known devices and increases efficiency of the magnetic treatment by increasing the degree of dispersion and homogenisation of those mediums owing to turbulence of the flow of the purified medium, in particular fuel for combustion engines, pumped through a flow chamber of the device claimed.

This purpose has been achieved owing to development of a device for magnetic treatment of liquid and gaseous mediums containing a cylindrical body equipped with a flow chamber for pumping treated medium through it, in particular fuel for combustion engines, filled with at least one sphere magnet, and inlet and outlet nozzles located opposite to each other on both end sides of the cylindrical body, characterised by that the flow chamber is made in the form of a diamagnetic corrugated pipe filled with sphere magnets, the middle part of which has a form of a spiral element located inside the cylindrical body made of non-magnetic material, and its ends act as inlet and outlet nozzles of the device.

Execution of the flow chamber in the form of a diamagnetic corrugated pipe filled with one row of sphere magnets allows to establish numerous activating nodes for pumping treated medium, in particular fuel for combustion engines, through the flow chamber. Combustion engine fuel, passing through an internal chamber of the diamagnetic corrugated pipe, is subjected at one side to an alternating magnetic field from the side of the sphere magnets located along the moving stream of fuel, and at the other side to dynamic activity of internal surfaces of corrugations, whereby each corrugation/fold is actually a de Laval nozzle, which produces a cavitation effect in the pumped liquid or gaseous medium, which enables dismantling of clusters, which are a collection of liquid or gaseous medium particles joined to each other, into individual particles, in particular particles of fuel, in order to activate them and obtain greater heat exchange of fuel during its combustion.

Presence of a large number of fuel activation zones in the flow chamber disturbs the flow of fuel along its axis, in the direction from inlet to outlet.

This leads to turbulisation of the treated fuel flow, which consists in formation of numerous turbulences in it. Vortices formed as a result of the fuel flow turbulisation cause a cavitation process in the flow, as a result of which fuel is subjected to heating, magnetodynamic dispersion and homogenisation, which improves physico-chemical parameters of the treated fuel, in particular: its density, calorific value and ease of ignition, which leads to more efficient combustion of fuel in an engine, which results in fuller combustion of fuel.

Execution of the middle part of the corrugated pipe in the form of a spiral element allows to increase the total length of the corrugated pipe and correspondingly the length of the flow chamber, which ensures increase of distance and time spent in a working zone by fuel pumped through the flow chamber, which in turn increases the level of magnetisation and dispersion of fuel in the flow chamber of the proposed device.

In a special execution of the proposed device sphere magnets filling the corrugated pipe are made as magnets of the same diameter, allowing unification of dimensions of the sphere magnets, which are working parts of the device, and thus increasing its ease of maintenance.

In another special execution of the device for magnetic treatment of liquid and gaseous mediums diameters of the flow zone of the corrugated pipe (D) and of each sphere magnet (d) are selected in accordance with the following mathematical relationship:

$$0.50D < d \leq 0.95D$$

where: d - is the diameter of the sphere magnet, mm;
D - is the diameter of the corrugated pipe flow cross section, mm.

The selected ratio of the diameters of the corrugated pipe (D) flow zone and each sphere magnet (d) allows to set an optimal range of the cross section of the flow chamber of the device according to the invention and the diameter of the sphere magnet in order to select performance parameters of the device and the degree of magnetisation of the treated flow of liquid or gaseous medium depending on specific conditions of the device use.

In another special execution of the device for magnetic treatment of liquid and gaseous mediums internal surface of the corrugated pipe is covered with a layer of platinum and palladium catalyst, which allows to increase its catalytic properties and to increase the degree of the treated fuel activation.

In another special execution of the proposed device external surface of sphere magnets is covered with a layer of platinum and palladium catalyst, which increases its catalytic properties and the degree of the treated fuel activation.

In a special embodiment of the proposed device at least one sphere magnet is made from neodymium alloy or samarium-cobalt alloy, which provides a magnetic field of increased strength.

In another special embodiment of the proposed device inlet and outlet ducts are equipped with connecting elements made in the form of threaded connectors, allowing for integration of the device according to the invention with a fuel line of the combustion engine and connection with it.

In another special execution of the proposed device inlet and outlet ducts are equipped with connecting elements made in the form of bayonet locks, which ensure quick dismantling of the installation of the proposed device in a fuel line.

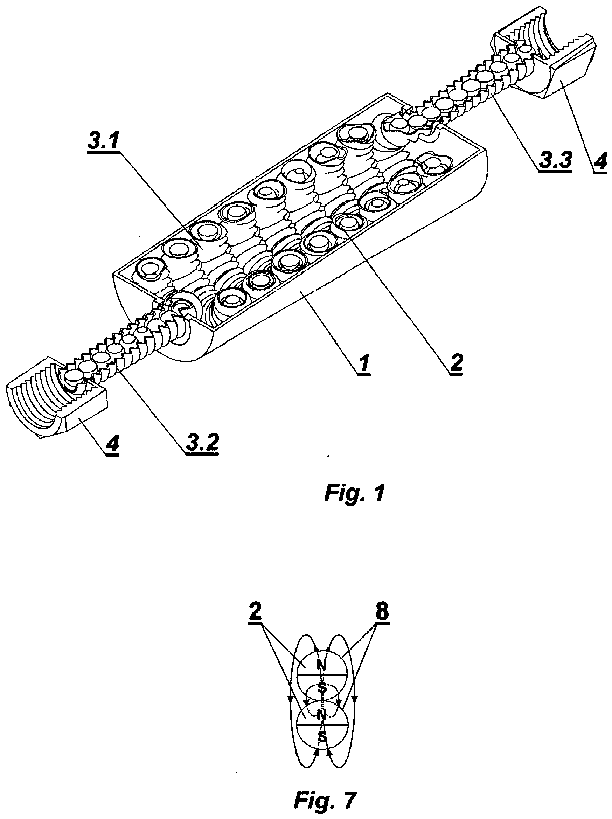

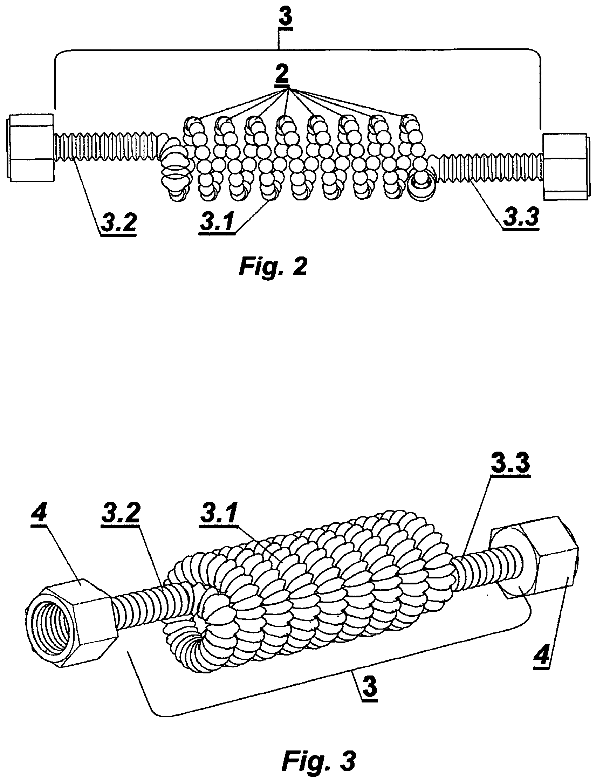

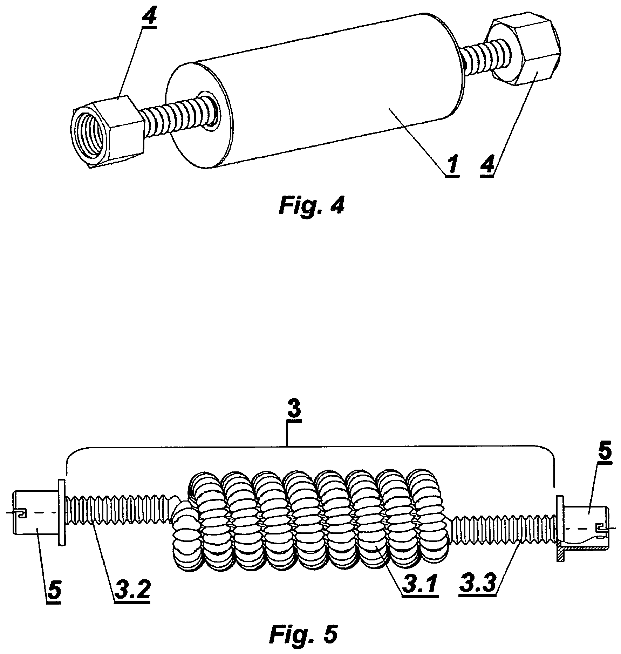

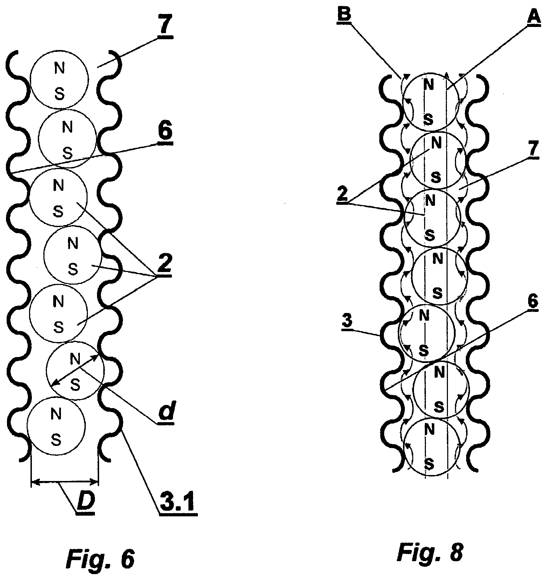

The subject matter of the invention is presented in embodiment on the drawing, where Fig. 1 presents an isometric cross section of the device for magnetic treatment of liquid and gaseous mediums, Fig. 2 presents a general view of the device without a cylindrical body and a middle part of a corrugated pipe, Fig. 3 presents an isometric view of the device without the cylindrical body, Fig. 4 presents an isometric view of the device, Fig. 5 presents a front view of the device without a casing with connecting elements made in the form of bayonet locks, Fig. 6 presents a system of sphere magnets in a longitudinal section across the corrugated pipe, Fig. 7 presents schematic pairs of sphere magnets with N and S magnetic poles and lines of the magnetic field induced by this pair of magnets, and Fig. 8 presents a diagram of movement of the treated medium in a longitudinal section across the corrugated pipe in which the sphere magnets are located.

As it is presented on the drawing, the device for magnetic treatment of liquid and gaseous mediums contains a cylindrical body **1,** equipped with a flow chamber for pumping treated medium through it, in particular fuel for combustion engines, which is filled with one row of sphere magnets **2.** The cylindrical body **1** is made from non-magnetic material. The flow chamber is made in the form of a diamagnetic corrugated pipe **3,** whose middle part **3.1** is in the form of a spiral element **7** fixed inside the cylindrical body **1,** and its end sections **3.2** and **3.3** serve as inlet and outlet pipes of the device and are located at both end sides of the cylindrical body **1.** The sphere magnets **2** located in the corrugated pipe **3** have the same diameter "d", while the diameter "D" of a pass-through section of the corrugated pipe **3** and the diameter "d" of the sphere magnet **2** are selected in accordance with the following mathematical relationship:

$$0.50D < d \leq 0.95D$$

where: d - is the diameter of the sphere magnet 2, mm;

D - is the diameter of the flow section of the corrugated pipe 3,

mm.

The selected ratio of the flow surface of the corrugated pipe **3** to the sphere magnet **2** causes a zigzag arrangement of the sphere magnets **2** in a recess **2** of the corrugated pipe **3,** whereas the ratio of the flow zone diameter "D" of the corrugated pipe **3** to the diameter "d" of the sphere magnet **2** allows for setting optimal dimensions of the cross section of the device flow chamber in order to select its efficiency and the degree of magnetisation of the treated flow of liquid or gaseous medium depending on particular conditions of use.

Also the degree of magnetisation of the treated stream of liquid or gaseous medium depends on the total length of the corrugated pipe **3** in which the sphere magnets **2** are located. The total length of the corrugated pipe **3** in which the sphere magnets **2** are located consists of a middle part **3.1,** which has the form of a spiral element installed inside the cylindrical body **1** and lengths of end parts of the corrugated pipe **3,** which serve as an inlet **3.2** and an outlet **3.3** of the device. The fact the the middle part **3.1** of the corrugated pipe **3** is made in the form of a spiral element ensures not only activation of the magnetising process of the treated stream of liquid or gaseous medium, but also compactness of the device.

An internal surface **5** of the corrugated pipe **3** and an external surface of the sphere magnets **2** is covered with a layer of platinum and palladium catalyst, allowing for improvement of catalytic properties of the device and increase of the degree of the treated fuel activation.

Application of the sphere magnets **2** from neodymium alloy or samarium-cobalt alloy provides a magnetic field of a greater strength, of magnetic flux density 1.1 - 1.3 T (Tesla). The inlet **3.2** and the outlet **3.3** are equipped with connecting elements made in the form of threaded connectors **4,** which allows the device according to the invention to be built into a fuel line of a combustion engine and to be connected to it.

In a version of execution of the device the inlet pipe **3.2** and the outlet pipe **3.3** are equipped with connecting elements made in the form of bayonet connectors **5,** which ensure quick dismantling of the installation of the proposed device in a fuel line. Execution of the flow chamber in the form of the diamagnetic corrugated pipe **3,** filled with one row of the sphere magnets **2** allows to create numerous activation nodes in the form of de Laval nozzles for pumping the treated medium, in particular fuel for combustion engines, through the flow chamber. Combustion engine fuel passes through the internal recess **2** of the diamagnetic corrugated pipe **3,** where it is subjected at one side to an alternating magnetic field from the side of the sphere magnets **2** located along the moving fuel stream, and at the other side to dynamic activity from the internal surface of corrugations, whereby each corrugation/fold is actually a de Laval nozzle. Such a de Laval nozzle created by each corrugation of the corrugated pipe **3** has a cavitation effect in the pumped treated medium, which leads to fragmentation of clusters, which are a set of interconnected particles of liquid or gaseous medium, in particular fuel for combustion engines, into separate particles, allowing their activation and obtaining greater heat exchange of fuel during combustion. At the same time pumping fuel through the corrugated pipe **3** filled with the sphere magnets **2** provides it being influenced by the alternating magnetic field, whose value reaches maximum near the point of contact of the N pole of one magnet with the S pole of the other magnet, and decreases when going away from a particular point of contact. Such an impact of the magnetic field on the pumped medium leads to reorientation of fuel particles under the influence of the magnetic field generated by each sphere magnet **2,** which disturbs the flow of fuel moving along the axis of the corrugated pipe **3** in the direction from the inlet **3.2** to the outlet **3.3**. This results in turbulisation of the flow of the treated fuel, which leads to creation of numerous vortices in it. The vortices created as a result of the fuel flow turbulence cause a cavitation effect in the flow, as a result of which fuel undergoes magnetodynamic dispersion and homogenisation, which improves physico-chemical parameters of the treated fuel, in particular its density, calorific value and ease of ignition.

Execution of the middle part **3.1** of the corrugated pipe **3** in the form of a spiral element allows to increase the total length of the corrugated pipe **3** and correspondingly the length of the flow chamber, which increases the length of the flow of fuel pumped through the flow chamber. This in turn increases the degree of magnetisation and dispersion of fuel in the flow chamber.

The device for magnetic treatment of liquid and gaseous mediums, in particular fuel for combustion engines, is used as follows.

The device is connected to a fuel line feeding fuel to a car's engine with threaded connectors **4** or bayonet connectors **5** mounted on the pipe **3.2** and on the outlet pipe **3.3**, whereby the outlet pipe **3.3** is connected directly to a car's engine. Then combustion engine fuel, which is subjected to magnetisation and dispersion, is pumped through the flow chamber of the device in the direction from the inlet pipe **3.2** to the outlet pipe **3.3**. In this case the stream of fuel flowing into the chamber passes through the corrugated pipe **3,** which is filled with one row of sphere magnets **2**. While fuel is flowing along the corrugated pipe **3** fuel particles cross lines of force of a magnetic field **A** and **B** generated by the sphere magnets **2.**

In this way the stream of fuel passing through the internal recess **6** of the corrugated pipe **3** is subjected to the activity of the alternating magnetic field from the side of the sphere magnets **2** located along the corrugated pipe **3,** as a result of which it becomes magnetised.

At the same time the flow of fuel, passing through an internal chamber **7** of the corrugated pipe **3** is subjected to dynamic influence from the internal surface of the corrugated pipe **3,** whose each corrugation/fold is a de Laval nozzle which creates a cavitation effect in the pumped fuel, allowing for clusters division, that is, separation of joined fuel particles into separate particles having greater activity and greater heat transfer during combustion of fuel in a combustion engine.

At the same time execution of the middle part **3.1** of the corrugated pipe 3 in the form of a spiral element provides increase of distance and time of staying in the corrugated pipe **3** of fuel pumped through the flow chamber, which increases the degree of its magnetisation and dispersion in the device according to the invention.

A technical effect of the invention claimed is increasing efficiency of liquid and gaseous mediums treatment, in particular fuel for combustion engines, owing to its magnetisation, dispersion and homogenisation, as well as by increasing distance and time of contact of fuel with sphere magnets inducing a magnetic field in a closed volume of the flow chamber **7** of the device claimed.

## Claims

1. A device for magnetic treatment of liquid and gaseous mediums containing a cylindrical body equipped with a flow chamber for pumping treated medium through it, in particular fuel for combustion engines, which is filled with at least one row of sphere magnets, as well as with inlet and outlet nozzles located on opposite sides of the cylindrical body **characterised by that** the flow chamber is made in the form of a diamagnetic corrugated pipe (3) filled with the sphere magnets (2), whose middle part (3.1) has the form of a spiral element installed inside the cylindrical body (1) made from non-magnetic material, and its end parts serve the function of the inlet nozzles (3.2) and the outlet nozzles (3.3) of the device.

2. A device according to claim 1, **characterised by that** the sphere magnets (2) located in the corrugated pipe (3) have the same diameter.

3. A device according to claim 1 or 2, **characterised by that** an internal diameter of a flow zone of the corrugated pipe (D) and a diameter of each sphere magnet (d) are selected in accordance with the following mathematical relationship:

$$0.50D < d \leq 0.95D$$

where:

   (d) - is the diameter of the sphere magnet (2), mm;
   (D) - is the diameter of the flow section of the corrugated pipe (3), mm.

4. A device according to claim 1, **characterised by that** an internal surface (6) of the corrugated pipe (3) is covered with a layer of platinum and palladium catalyst.

5. A device according to claim 1, **characterised by that** onto an external surface (2) of the sphere magnets (2) a platinum and palladium coating of the catalyst is applied.

6. A device according to claim 1, **characterised by that** at least one sphere magnet (2) is made from neodymium-iron alloy or samarium-cobalt alloy.

7. A device according to claim 1, **characterised by that** inlet pipes (3.2) and outlet pipes (3.3) are equipped with connecting elements made in the form of threaded connectors (4).

8. A device according to claim 1, **characterised by that** the inlet pipes (3.2) and the outlet pipes (3.3) are equipped with connecting elements made in the form of bayonet connectors (5).

**Fig. 1**

**Fig. 7**

**Fig. 2**

**Fig. 3**

4

1 4

**Fig. 4**

3

5

5 3.2 3.1 3.3

**Fig. 5**

**Fig. 6**

**Fig. 8**

Europäisches
Patentamt

European
Patent Office

Office européen
des brevets

# EUROPEAN SEARCH REPORT

Application Number

**EP 24 46 0009**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/124275 A1 (DILOYAN OLEKSANDR [US] ET AL) 23 April 2020 (2020-04-23) <br> * paragraph [0048]; figures 6, 2 * <br> * paragraph [0026] * <br> * paragraph [0034] * <br> * paragraph [0028] * <br> ----- | 1-8 | INV. <br> F02M27/04 |
| Y | US 3 059 910 A (MIYATA MORIYA SABURO) 23 October 1962 (1962-10-23) <br> * column 2, line 6; figure 1 * <br> ----- | 1-8 | |
| A | US 3 411 120 A (SABURO MIYATA) 12 November 1968 (1968-11-12) <br> * figure 8 * <br> ----- | 1-8 | |

TECHNICAL FIELDS
SEARCHED      (IPC)

**F02M**

The present search report has been drawn up for all claims

| Place of search | Date of completion of the search | Examiner |
|---|---|---|
| Munich | 24 April 2024 | Kolodziejczyk, Piotr |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

.......................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 46 0009

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2024

| Patent document cited in search report | | Publication date | Patent family member(s) | | Publication date |
|---|---|---|---|---|---|
| US 2020124275 | A1 | 23-04-2020 | US | 2020124275 A1 | 23-04-2020 |
| | | | WO | 2019005672 A1 | 03-01-2019 |
| US 3059910 | A | 23-10-1962 | NONE | | |
| US 3411120 | A | 12-11-1968 | NONE | | |

EPO FORM P0459

For more details about this annex : see Official Journal of the European Patent Office, No. 12/82

**REFERENCES CITED IN THE DESCRIPTION**

**Patent documents cited in the description**

- RU 2115010
- RU 67654 U
- SU 1388573